(19) Europäisches Patentamt
European Patent Office
Office européen des brevets

(11) **EP 3 440 441 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**03.06.2026   Patentblatt 2026/23**

(45) Hinweis auf die Patenterteilung:
**14.07.2021   Patentblatt 2021/28**

(21) Anmeldenummer: **17712426.0**

(22) Anmeldetag: **08.03.2017**

(51) Internationale Patentklassifikation (IPC):
**G01G 19/00** $^{(2006.01)}$

(52) Gemeinsame Patentklassifikation (CPC):
**B65G 54/02; G01G 3/16**

(86) Internationale Anmeldenummer:
**PCT/EP2017/055461**

(87) Internationale Veröffentlichungsnummer:
**WO 2017/174286 (12.10.2017 Gazette 2017/41)**

(54) **VERFAHREN ZUM TRANSPORTIEREN EINES GUTES, MEHRDIMENSIONALER ANTRIEB UND VERARBEITUNGSVORRICHTUNG**

METHOD FOR TRANSPORTING A MATERIAL, MULTI-DIMENSIONAL DRIVE, AND PROCESSING DEVICE

PROCÉDÉ DE TRANSPORT D'UNE MARCHANDISE, ENTRAÎNEMENT MULTIDIMENSIONNEL ET DISPOSITIF DE TRAITEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2016   DE 102016205513**

(43) Veröffentlichungstag der Anmeldung:
**13.02.2019   Patentblatt 2019/07**

(73) Patentinhaber: **Syntegon Technology GmbH**
**70372 Stuttgart (DE)**

(72) Erfinder:
• **PANCRAS, Wilco**
  **5612 KG Eindhoven (NL)**
• **HANISCH, Markus**
  **71706 Markgroeningen (DE)**
• **PHAN, Huu-Thanh**
  **71332 Waiblingen (DE)**
• **PHILIPP, Andre**
  **47877 Willich (NL)**

(74) Vertreter: **DREISS Patentanwälte PartG mbB**
**Postfach 10 37 62**
**70032 Stuttgart (DE)**

(56) Entgegenhaltungen:
WO-A1-2004/074057    WO-A1-2013/059934
WO-A1-2015/056847    DE-A1- 102004 002 920
DE-A1- 19 945 584    JP-A- H0 336 115
JP-A- H09 308 019

EP 3 440 441 B2

**Beschreibung**

Stand der Technik

Die vorliegende Erfindung betrifft ein Verfahren zum Transportieren eines Gutes, einen mehrdimensionalen Antrieb, insbesondere einen Antrieb mit sechs Freiheitsgraden und/oder einen Planarantrieb, sowie eine Verarbeitungsvorrichtung zum Verarbeiten eines Gutes und insbesondere eine Schlauchbeutelanlage.

Beim Handhaben von Gütern, zum Beispiel bei deren Abfüllung und/oder Transport, werden unterschiedliche Mechanismen zum Bewegen und Positionieren von Trägern für das jeweils zu handhabende Gut eingesetzt. Häufig ist es notwendig, das zu handhabende Gut hinsichtlich seiner Masse oder seines Gewichts zu bewerten. Dazu werden Wiegeeinrichtungen verwendet, die jedoch separat zu einer zu Grunde liegenden Transporteinrichtung ausgebildet und angeordnet sind. Folglich liegen herkömmlicherweise Funktionen des Transportierens und Handhabens und Funktionen des Wiegens getrennt realisiert vor. Dies erfordert häufig einen apparativen und/oder logistischen Mehraufwand.

Die Druckschrift DE 199 45584 A1 beschreibt einen mehrdimensionalen Antrieb für Arbeitsmaschinen mit sich kreuzenden und gleichartigen Linearantriebsmodu len.

Die WO 2004/074057 A1 betrifft ein Verfahren und eine Vorrichtung zur computerunterstützten Schätzung der Masse eines Fahrzeugs.

Die WO 2015/056847 A1 offenbart eine magnetische Transportvorrichtung mit einem Transportträger, der mit mehreren Magnetkernen ausgebildet ist, um mit mehreren Statorspulen magnetisch wechsel zu wirken.

JP H03 36115 A offenbart einen Träger für ein Gut, der nach dem Prinzip einer Magnetschwebebahn auf Schienen transportiert wird.

Der Erfindung liegt die Aufgabe zu Grunde, ein Verfahren zum Transportieren eines Gutes, einen mehrdimensionalen Antrieb und eine Verarbeitungseinrichtung anzugeben, bei welchen bei besonders geringem Aufwand im Zusammenhang mit einem Transportieren auch das Bestimmen der Masse eines Guts möglich ist.

Offenbarung der Erfindung

Die der Erfindung zu Grunde liegende Aufgabe wird bei einem Verfahren zum Transportieren mit den Merkmalen des Anspruchs 1, bei einem mehrdimensionalen Antrieb erfindungsgemäß mit den Merkmalen des Anspruchs 6 und bei einer Verarbeitungsvorrichtung erfindungsgemäß mit den Merkmalen des Anspruchs 10 gelöst. Vorteilhafte Weiterbildungen sind Gegenstand der jeweiligen abhängigen Ansprüche

Das erfindungsgemäße Verfahren mit den Merkmalen des unabhängigen Anspruches 1 weist demgegenüber den Vorteil auf, dass Vorgänge des Transportierens oder Handhabens einerseits und des Wiegens und somit des Bestimmens der Masse des Gutes andererseits einheitlich und ohne apparativen und/oder logistischen Mehraufwand realisiert sind.

Dies wird erfindungsgemäß mit den Merkmalen des unabhängigen Anspruches 1 dadurch erreicht, dass das Transportieren mittels eines mehrdimensionalen Antriebs erfolgt, welcher ausgebildet ist mit:

- einem Stator mit einer ersten Magneteinrichtung zum Erzeugen eines ersten Magnetfeldes und
- einem Beweger, welcher eine zweite Magneteinrichtung zur Erzeugung eines zweiten Magnetfeldes zur magnetischen Wechselwirkung mit dem vom Stator erzeugbaren ersten Magnetfeld aufweist und welcher einen Träger und/oder einen Behälter für ein zu transportierendes Gut aufweist oder bildet,

und bei welchem durch die magnetische Wechselwirkung der Beweger relativ zum Stator berührungsfrei und steuerbar bewegbar ist, dass ein Träger zur Aufnahme und zum Tragen des Gutes verwendet wird, dass mindestens eine für einen Bewegungszustand des Trägers repräsentative Größe und dadurch der Bewegungszustand des Trägers mit und ohne Gut erfasst wird, vor, während und/oder nach einem Transportvorgang des Trägers (a) aus einer für eine Änderung des Bewegungszustandes des Trägers repräsentativen Größe und/oder (b) aus einer für ein Mittel zum Erreichen und/oder zum Erhalten eines Bewegungszustandes des Trägers mit und ohne Gut repräsentativen Größe die Masse des Gutes bestimmt wird. Das erfindungsgemäße Verfahren gestaltet sich deshalb besonders einfach, weil aus dem Vorgang des Transportierens als Handhabungsprozess als solchem heraus inhärent ein oder mehrere Größen abgeleitet werden, auf deren Grundlage dann die Masse des Gutes bestimmt werden kann. Die der Massenbestimmung des Gutes zu Grunde gelegte Größe ist jeweils eine Größe, die repräsentativ ist (a) für eine Änderung eines Bewegungszustandes eines verwendeten Trägers oder aber (b) für ein Mittel zum Erreichen und/oder zum Erhalten eines Bewegungszustandes des Trägers, nämlich jeweils mit und ohne Gut. Bei dem erfindungsgemäßen Verfahren werden konkrete Ausgestaltungen des Bewegungszustandes des zu Grunde liegenden Trägers berücksichtigt. Diese können auch in Kombination miteinander verwendet werden.

Bei einem Bewegungszustand des Trägers wird Bezug genommen auf einen Zustand mit konstanter Geschwindigkeit des Trägers parallel zu einer gegebenen Referenzfläche. Alternativ oder zusätzlich erfolgt die Bezugnahme auf einen Schwingungszustand als Bewegungszustand des zu Grunde liegenden Trägers. Bei einem derartigen Schwingungszustand schwingt zumindest das Gut auf dem Träger - insbesondere linear - in einer Ebene parallel oder senkrecht zu einer Referenzfläche um eine bestimmte Ruhelage.

Erfindungsgemäß wird also jeweils auf den Bewegungszustand des Trägers für das zu transportierende und/oder zu handhabende Gut zurückgegriffen.

Der Bewegungszustand des Trägers ändert sich nämlich - sofern keine Gegenmaßnahmen getroffen werden - wenn sich die Masse des Trägers insgesamt, nämlich durch Zuführen oder Zudosieren des Gutes, ändert.

Erfindungsgemäß wird entweder die Änderung des Bewegungszustandes selbst erfasst oder aber es werden diejenigen Maßnahmen bewertet, die ergriffen werden müssen, um einen bisherigen Bewegungszustand des Trägers aufrecht zu erhalten.

Die Unteransprüche zeigen bevorzugte Weiterbildungen der Erfindung.

Zusätzlich kann bei einem Bewegungszustand des Trägers Bezug genommen werden auf einen Zustand mit konstanter Geschwindigkeit des Trägers senkrecht zu einer gegebenen Referenzfläche. Auch in diesem Zusammenhang kann die Bewegung in Bezug auf weitere Flächen senkrecht zur Referenzfläche mit einem abweichenden oder beliebigen Bewegungszustand des Trägers vorliegen.

Die Schwingungsbewegung kann auch einem weiteren Bewegungszustand überlagert sein. Dieser weitere Bewegungszustand kann sich auch auf die Referenzfläche oder auf Flächen senkrecht zur Referenzfläche beziehen.

Bei einer anderen Fortbildung des erfindungsgemäßen Verfahrens zum Transportieren eines Gutes werden für die Bestimmung des Gewichts oder der Masse des Gutes bestimmte konkrete Größen herangezogen, die aus einem Erfassungs- oder Messprozess ermittelt werden können. So kann es vorgesehen sein, dass (a) die für einen Bewegungszustand des Trägers oder für dessen Änderung repräsentative Größe und/oder (b) die für ein Mittel zum Erreichen und/oder zum Erhalten eines Bewegungszustandes des Trägers mit und ohne Gut repräsentativen Größe ein Abstand, eine Abstandsänderung, eine Geschwindigkeit, eine Geschwindigkeitsänderung, eine Beschleunigung, eine Kraft, eine für eine Kraft ursächliche Größe, insbesondere eine magnetische Flussdichte, eine elektrische Stromstärke oder deren zeitliche Änderung ist.

Insbesondere zum Aufrechterhalten eines Bewegungszustandes des Trägers können ein Regelkreis, ein Rückkopplungssystem oder dergleichen zu Grunde gelegt werden.

So ist es bei einer alternativen Ausgestaltungsform des erfindungsgemäßen Verfahrens vorgesehen, dass die für einen Bewegungszustand des Trägers oder für dessen Änderung repräsentative Größe eine Regelgröße oder eine für eine Regelgröße eines zu Grunde liegenden Regelkreises zum Erreichen und/oder zum Erhalten eines Bewegungszustandes des Trägers mit und ohne Gut repräsentative Größe ist.

Ferner ist bei einer weiteren Ausgestaltungsform des erfindungsgemäßen Verfahrens die für ein Mittel zum Erreichen und/oder zum Erhalten eines Bewegungszustandes des Trägers oder für dessen Änderung repräsentative Größe eine Stellgröße oder eine für eine Stellgröße eines zu Grunde liegenden Regelkreises zum Erreichen und/oder zum Erhalten eines Bewegungszustandes des Trägers mit und ohne Gut repräsentative Größe.

Ferner betrifft die vorliegende Erfindung einen mehrdimensionalen Antrieb und insbesondere einen Antrieb mit sechs Freiheitsgraden und/oder einen Planarantrieb.

Diese sind ausgebildet und eingerichtet, ein erfindungsgemäßes Verfahren zum Transportieren eines Gutes auszuführen und weisen dazu entsprechende Mittel auf.

Bei einer Ausführungsform des erfindungsgemäßen mehrdimensionalen Antriebs ist dieser ausgebildet mit einem Stator mit einer ersten Magneteinrichtung zum Erzeugen eines ersten Magnetfeldes und einem Beweger, welcher eine zweite Magneteinrichtung zur Erzeugung eines zweiten Magnetfeldes zur magnetischen Wechselwirkung mit dem vom Stator erzeugbaren ersten Magnetfeld aufweist und welcher einen Träger und/oder einen Behälter für ein zu transportierendes Gut aufweist oder bildet, wobei durch die magnetische Wechselwirkung der Beweger relativ zum Stator berührungsfrei und steuerbar bewegbar ist.

Denkbar ist auch der Einsatz von Mechanismen auf der Grundlage von PMerregbaren Maschinen, Reluktanzmotoren und ansynchron arbeitenden Antrieben.

Bei einer Weiterbildung des erfindungsgemäßen mehrdimensionalen Antriebs werden entsprechende Maßnahmen zum Erfassen von Größen vorgesehen, die der Bestimmung des Gewichts oder der Masse des Gutes dienlich sind.

So ist der mehrdimensionale Antrieb gemäß der bevorzugten Ausführungsform ausgebildet mit einer Erfassungseinheit, welche zum Erfassen (a) einer für eine Änderung des Bewegungszustandes des Trägers repräsentativen Größe und/oder (b) einer für ein Mittel zum Erreichen und/oder zum Erhalten eines Bewegungszustandes des Trägers mit und ohne Gut repräsentativen Größe ausgebildet und eingerichtet ist und dazu insbesondere mindestens eine Sensoreinheit aufweist.

Zur konkreten Bewertung entsprechend abgeleiteter Größen im Hinblick auf die Charakterisierung der Masse des Gutes ist der mehrdimensionale Antrieb vorteilhafterweise ausgebildet mit einer Auswerte- und Steuereinheit, welche zum Aufnehmen (a) einer für eine Änderung des Bewegungszustandes des Trägers repräsentativen Größe und/oder (b) einer für ein Mittel zum Erreichen und/oder zum Erhalten eines Bewegungszustandes des Trägers mit und ohne Gut repräsentativen Größe ausgebildet und eingerichtet ist und dazu insbesondere über eine Steuer- und Messleitungen mit einer Sensoreinheit verbunden und/oder zur Steuerung des Stators und/oder des Bewegers ausgebildet ist.

Gemäß einem weiteren Aspekt der vorliegenden Erfindung werden eine Verarbeitungsvorrichtung zum Verarbeiten eines Guts und insbesondere eine Schlauchbeutelanlage geschaffen. Diese weist einen erfindungsgemäßen mehrdimensionalen Antrieb auf und ist dazu ausgebildet und eingerichtet, ein zu Grunde liegendes Gut mittels eines Bewegers als Träger des Guts, insbesondere als oder mit einem Behälter, zu transportieren.

Kurzbeschreibung der Figuren

Unter Bezugnahme auf die beigefügten Figuren werden Ausführungsformen der Erfindung im Detail beschrieben.

| | |
|---|---|
| Figur 1 | ist eine schematische und seitliche Perspektivansicht einer Ausführungsform eines erfindungsgemäßen mehrdimensionalen Antriebs, welcher bei einer Ausführungsform des erfindungsgemäßen Verfahrens zum Transportieren eines Gutes verwendet werden kann. |
| Figur 2 | zeigt in schematischer und perspektivischer Seitenansicht eine andere Ausführungsform eines erfindungsgemäßen mehrdimensionalen Antriebs zur Verwendung bei einer Ausführungsform des erfindungsgemäßen Verfahrens zum Transportieren eines Gutes. |
| Figur 3 | zeigt in schematischer und geschnittener Seitenansicht Details einer anderen Ausführungsform des erfindungsgemäßen mehrdimensionalen Antriebs. |
| Figuren 4 bis 7 | zeigen in Seitenansicht verschiedene Ausführungsformen des erfindungsgemäßen mehrdimensionalen Antriebs im Zusammenhang mit einer erfindungsgemäßen Verarbeitungsvorrichtung. |
| Figuren 8 und 9 | zeigen Blockdiagramme zu Ausführungsformen des erfindungsgemäßen Verfahrens zum Transportieren eines Gutes unter Berücksichtigung von Aspekten der Massen- oder Gewichtsbestimmung. |
| Figuren 10 bis 13 | zeigen in schematischen Drauf- bzw. Seitenansichten Lageranordnungen, die bei einem Stator einer Ausführungsform des erfindungsgemäßen mehrdimensionalen Antriebs zum Einsatz kommen können. |
| Figur 14 | erläutert in Form eines Graphen die Bestimmung der Masse eines Gutes aus der Auswertung der Änderung einer Schwingungscharakteristik eines Trägers. |
| Figur 15 | zeigt in schematischer und perspektivischer Seitenansicht einen Träger für ein Gut, welcher bei der Bestimmung der Masse des Gutes aus der Änderung einer Schwingcharakterisik zu Grunde gelegt werden kann. |

Bevorzugte Ausführungsformen der Erfindung

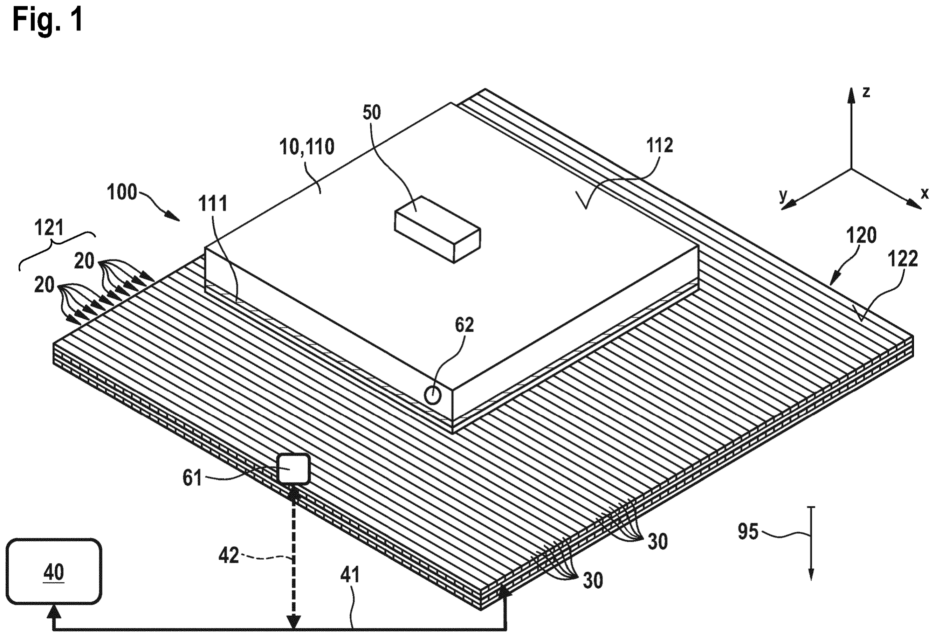

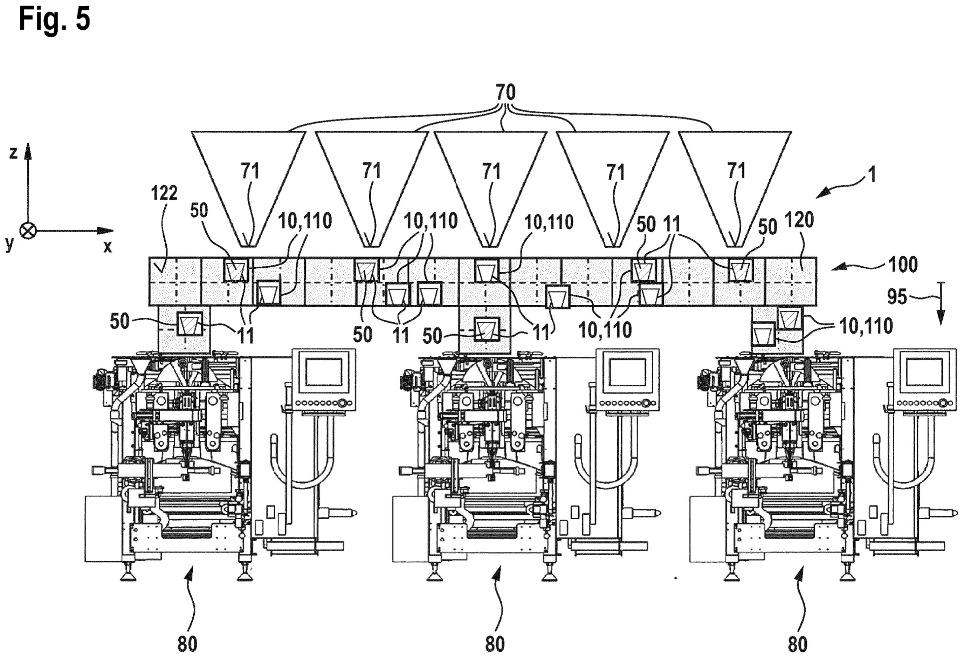

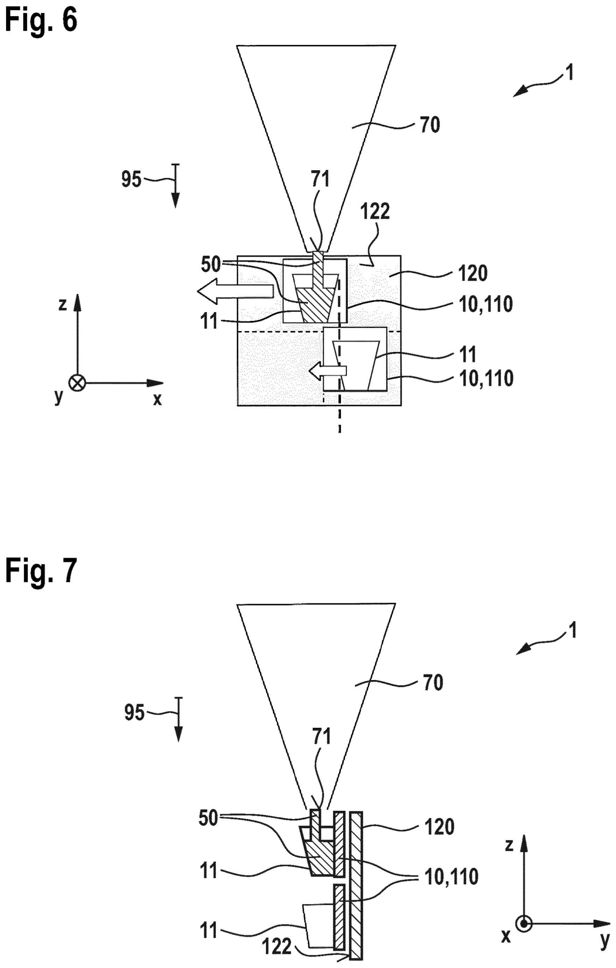

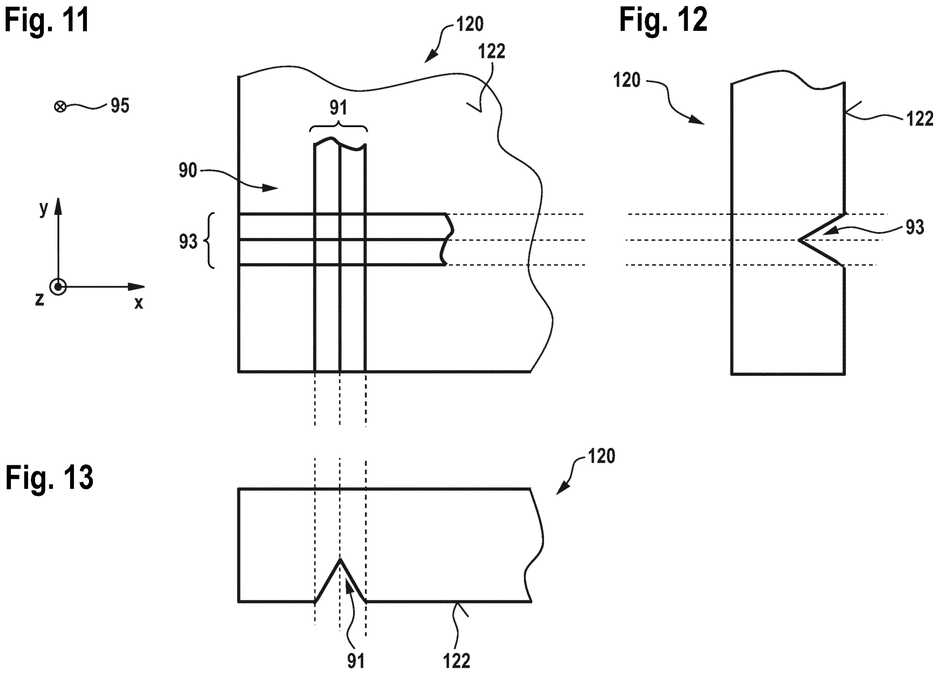

Nachfolgend werden unter Bezugnahme auf die Figuren 1 bis 15 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in schematischer und perspektivischer Seitenansicht eine erste Ausführungsform eines erfindungsgemäßen mehrdimensionalen Antriebs 100 als mehrdimensionalen Antrieb in der xy-Ebene.

Diese Ausführungsform des erfindungsgemäßen mehrdimensionalen Antriebs 100 besteht aus einem ruhenden Stator 120, welcher die Antriebsfläche oder Antriebsebene bildet, und einen berührungsfrei auf dem Stator 120 steuerbar bewegbaren Beweger 110.

Im Zusammenhang mit der vorliegenden Erfindung bildet der Beweger 110 einen Träger 10 für ein zu transportierendes und handzuhabendes Gut 50. Der Beweger 110 wird oft auch als Mover oder als Carrier bezeichnet. Im Folgenden werden diese Begriffe synonym verwendet.

Im Bereich der Unterseite besitzt der Beweger 110 eine erste Magnetfeldeinrichtung 111 zur Erzeugung eines ersten Magnetfeldes. Es kann sich dabei zum Beispiel um eine Anordnung mit oder aus einem oder mehreren Permanentmagneten handeln. Denkbar sind jedoch auch Elemente zur dynamischen Erzeugung eines Magnetfeldes und/oder Anordnungen, die durch Wechselwirkung mit dem Stator 120 Wirbelströme generieren und damit insbesondere eine Energiewandlung ermöglichen.

Der Stator 120 besitzt im Bereich seiner Oberseite 122, die auch als Referenzfläche bezeichnet wird, eine zweite Magnetfeldeinrichtung 121. Diese besteht aus einer Mehrzahl von Spulenanordnungen 20, die kurz auch als Spulen bezeichnet werden und die insbesondere einerseits in der x-Richtung und andererseits in der y-Richtung linear nebeneinander angeordnet sind und aus einer oder mehreren Wicklungen oder Windungen 30 eines elektrisch leitfähigen Materials bestehen.

Die Spulenanordnungen 20 in der x-Richtung und in der y-Richtung sind so miteinander kombiniert und unabhängig voneinander ansteuer- und erregbar, dass durch Steuerung mittels einer Auswerte- und Steuereinheit 40 und über eine Steuer- und Messleitung 41 ein steuerbares Magnetfeld z.B. als Wechselfeld erzeugbar ist, welches in Wechselwirkung mit dem durch die erste Magnetfeldeinrichtung 111 erzeugten Magnetfeldes des Bewegers 110 eine gesteuerte Bewegung des Bewegers 110 in der xy-Ebene mit steuerbarem Abstand zur Referenzfläche 122 der Oberseite des Stators 120 ermöglicht.

Zur Bestimmung von Position und Orientierung und ggf. weiterer Messgrößen - wie zum Beispiel elektrischem Strom, magnetischer Flussdichte usw. - ist eine Erfassungseinheit 60 beispielsweise mit einer ersten Sensoreinheit oder einem ersten Sensor 61 und einer zweiten Sensoreinheit und einem zweiten Sensor 62 am Stator 120 bzw. am Beweger 110 ausgebildet.

Die Sensoreinheiten 61, 62 sind über eine Steuer- und Messleitung 42 mit der Auswerte- und Steuereinheit 40 verbunden. Diese ist ihrerseits ausgebildet, von der Erfassungseinheit 60 und den ersten und zweiten Sensoreinheiten 61 bzw. 62 erfasste Größen in Form von Messwerten zu erhalten und auszuwerten, um eine Steuerung des Abstandes der Unterseite des Bewegers 110 von der Referenzfläche 122 und/oder die Bewegung des Bewegers 110 über der Referenzfläche 122 anzupassen. Zusätzlich ist die Auswerte- und Steuereinheit 40 dazu ausgebildet, auf der Grundlage der erfassten Größen das Gewicht oder die Masse eines auf der Oberseite 112 des Bewegers 110 als Träger 10 aufgebrachten Gutes 50 zu ermitteln.

Bei der Ausführung gemäß Figur 1 befindet sich der erfindungsgemäße mehrdimensionale Antrieb 100 in einem Schwerefeld, z.B. dem der Erde, dessen Richtung durch den Pfeil 95 bezeichnet wird und hier antiparallel zur z-Richtung ausgerichtet ist. Dies ist jedoch nicht zwingend. Vielmehr kann der erfindungsgemäße mehrdimensionale Antrieb 100 in Bezug auf die Richtung 95 eines Schwerefeldes und insbesondere mit seiner Referenzfläche 122 dazu beliebig orientiert sein. Ggf. ist auch eine Verwendung ohne Schwerefeld denkbar.

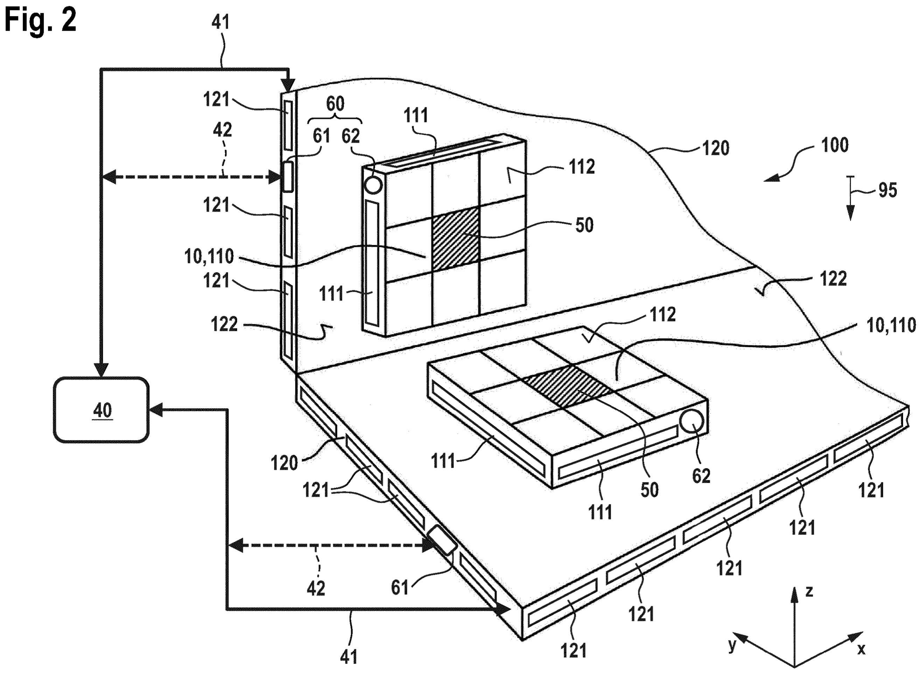

Bei der Ausführungsform gemäß Figur 2 besteht der erfindungsgemäße mehrdimensionale Antrieb 100 aus zwei Statoren 120, welche mit ihren Referenzflächen 122 als Oberflächen hier parallel zur xy-Ebene bzw. parallel zur xz-Ebene liegen. Die Referenzflächen 122 der Statoren 120 stehen somit senkrecht aufeinander. Auch diese Anordnung der Statoren 120 mit ihren Referenzflächen 122 ist nicht zwingend. Dies gilt auch in Bezug auf die Richtung 95 des angedeuteten Schwerefeldes.

Bei der Ausführungsform des erfindungsgemäßen mehrdimensionalen Antriebs 100 gemäß Figur 2 sind also zwei Antriebs- oder Bewegungsebenen ausgebildet, in welchen Beweger 110 als Träger 10 für zu handhabende Güter 50 gesteuert mittels erster Magnetfeldeinrichtungen 111 und zweiter Magnetfeldeinrichtungen 121 bewegbar sind. Dazu ist wieder eine Erfassungseinrichtung 60 mit ersten und zweiten Sensoreinrichtungen 61 und 62 über entsprechende Steuer- und Messleitungen 42 mit einer Auswerte- und Steuereinheit 40 verbunden, die ihrerseits die Magnetfeldeinrichtung 121 der Statoren 120 ansteuert.

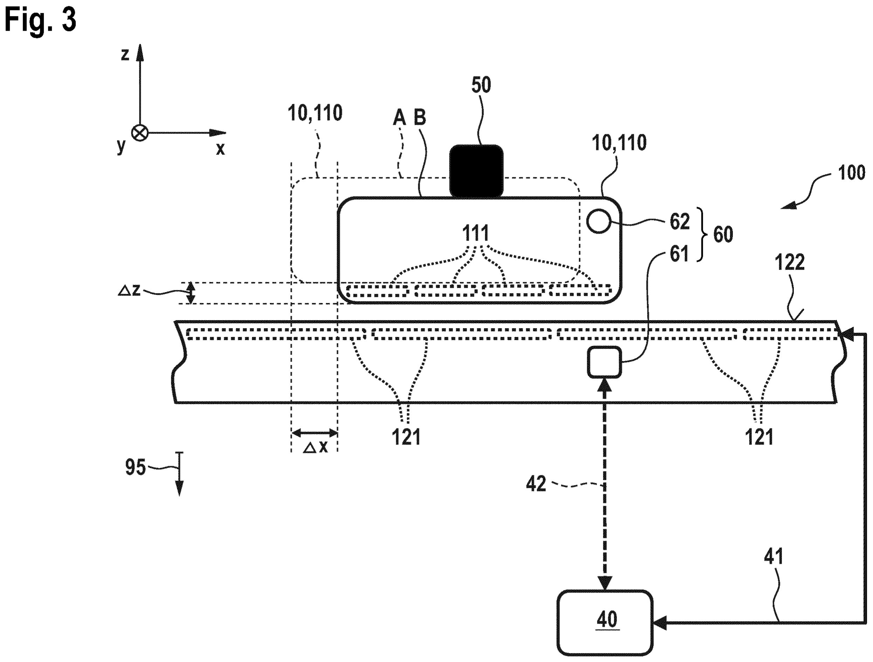

Figur 3 zeigt in schematischer und geschnittener Seitenansicht eine Ausführungsform des erfindungsgemäßen mehrdimensionalen Antriebs 100, welcher der Anordnung gemäß Figur 1 ähnelt.

Verdeutlicht ist hier die Anordnung des Bewegers 110 als Träger 10 für das zu transportierende Gut 50 in einer ersten Position oder Stellung A ohne das Gut 50 und in einer zweiten Position oder Stellung B nach dem Aufbringen des Gutes 50 für den Fall, dass eine Nachregelung in Bezug auf den Bewegungszustand des Trägers 10 hinsichtlich des Abstandes der Unterseite des Trägers 10 zur Referenzfläche 122 unterbleibt oder unvollständig ist. Zu erkennen ist, dass mit der Bewegung in der x-Richtung um den Betrag Δx eine Annäherung oder Absenkung des Bewegers 110 als Träger 10 für das Gut 50 entgegen der z-Richtung um den Betrag Δz erfolgt.

Allgemein werden eine Positions- und/odedr Orientierungsänderung beschrieben durch einen Vektor

$$\vec{A} = (\Delta x, \Delta y, \Delta z; \Delta rotx, \Delta roty, \Delta rotz)^T.$$

Es kann vorgesehen sein, dass mittels des mehrdimensionalen Antriebs 100 und der dort vorgesehenen ersten und zweiten Sensoreinrichtungen 61 und 62 über die Auswerte- und Steuereinheit 40 der Wert $\Delta z$ als Maß für die Änderung des Bewegungszustandes des Bewegers 110 erfasst wird, insbesondere unter Maßgabe der Richtung 95 und Stärke eines äußeren Schwerefeldes.

Im Falle einer fehlenden Ausgleichsregelung kann aus dem Wert $\Delta z$ die Masse des Gutes 50 ermittelt werden.

Es kann jedoch auch im Rahmen eines Regelkonzepts mit Rückkopplung nach dem Aufbringen des Gutes 50 auf der Oberseite 112 des Bewegers 110 als Träger 10 für das Gut 50 durch Nachregeln die Höhe des Trägers 10 über der Referenzfläche 122 beibehalten und somit der Wert $\Delta z = 0$ erzwungen werden. In diesem Zusammenhang wird dann über die Erfassungseinheit 60 und die Sensoreinheiten 61, 62 ein Maß für die Mittel erfasst, welche notwendig sind, um den Bewegungszustand des Bewegers 110 als Träger 10 über der Referenzfläche 122 in z-Richtung beizubehalten und eine Annäherung an die Referenzfläche 122 zu verhindern. Bei dem Mittel zum Nachregeln kann es sich zum Beispiel um die Erhöhung des elektrischen Stroms handeln, der notwendig ist, um über die zweite Magnetfeldeinrichtung 121 des Stators 120 das Magnetfeld zu erhöhen und damit diejenige Kraft zu erzeugen, die notwendig ist, um die Höhe des Trägers 10 über der Referenzfläche 122 beizubehalten. Der aufzuwendende Strom zur Erhöhung des Magnetfeldes und damit die zu steigernde Kraft entsprechen dann dem Gewicht des Gutes 50 im Schwerefeld mit der Richtung 95. Es kann unmittelbar auf die Masse des Gutes 50 geschlossen werden.

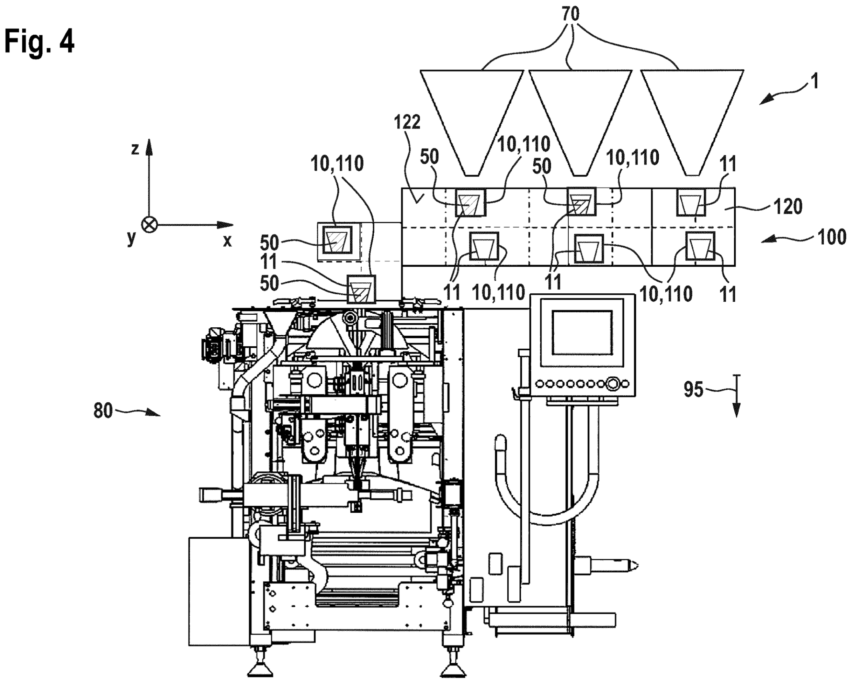

Die Figuren 4 bis 7 zeigen die Verwendung eines erfindungsgemäßen mehrdimensionalen Antriebs 100 im Zusammenhang mit einer Ausführungsform der erfindungsgemäßen Verarbeitungsvorrichtung 1 als so genannte Schlauchbeutelanlage.

Dargestellt sind jeweils Statoren 120, die mit ihren Oberflächen als Referenzflächen 122 parallel zur Richtung 95 des zu Grunde liegenden Schwerefeldes ausgerichtet sind. Sämtliche Statoren 120 liegen mit ihren Oberflächen als Referenzflächen 122 und somit mit den Antriebsflächen parallel zur xz-Ebene.

Sämtliche Ausführungsformen der erfindungsgemäßen Verarbeitungsvorrichtung 1 als Schlauchbeutelanlage besitzen in den Figuren 4 bis 7 Befüllstationen 70 mit im unteren Bereich vorgesehenen Austrittsöffnungen 71, welche für den Austritt des zu transportierenden oder zu handhabenden Gutes 50 als Schüttgut oder als Fließgut geeignet sind.

Mittels der entsprechenden gesteuerten Bewegung in Wechselwirkung zwischen Stator 120 und Beweger 110 werden entsprechende Behälter 11, die an den Bewegern 110 als Träger 10 angebracht sind, in den Bereich einer Austrittsöffnungen 71 einer Befüllstation 70 verfahren, um dann befüllt zu werden. Dabei kann es sich um ein einmaliges Befüllen im Einzel- oder im Parallelbetrieb handeln. Denkbar ist jedoch auch, dass die einzelnen Befüllstationen 70 dazu geeignet sind, die Behälter 11 mit unterschiedlichen Materialien zu befüllen, zum Beispiel um Mischungen herzustellen. Es können Schüttgüter und/oder Fließgüter zum Einsatz kommen.

Wichtig beim erfindungsgemäßen Konzept ist dabei, dass während oder nach einem Befüllen keine explizite Wiegestation bereitgestellt und angefahren werden muss, da bereits aus der Änderung des Bewegungszustandes eines jeweiligen Bewegers 110 als Träger 10 für Behälter 11 und Gut 50 oder aus dem Aufrechterhalten des jeweiligen Bewegungszustandes des Bewegers 110 automatisch und vor allem auch kontinuierlich auf eine Massenänderung des Bewegers 110 als Träger 10 und damit auf die Masse des Gutes 50 geschlossen werden kann. Bei Bekanntsein einer Ausgangsmasse für jeden Träger 10 als so genannte Taraeinstellung, ggf. unter Zugrundelegung der Masse des jeweiligen Behälters 11, kann unmittelbar auf die Masse oder das Gewicht des zugeführten Gutes 50 oder eines Teils davon geschlossen werden, so dass im Gesamtzusammenhang der vorgestellten Anlage 1 auch ein kontinuierliches Befüllen mit unterschiedlichen Gütern 50 und somit ein exaktes Ausbilden von Mischungen denkbar ist.

Nach dem Befüllen werden die vollständig oder teilweise befüllten Behälter 11 mit den Bewegern 110 als Träger 10 zu verschiedenen Beutelstationen 80 zur weiteren Verarbeitung und insbesondere zur Verpackung bewegt.

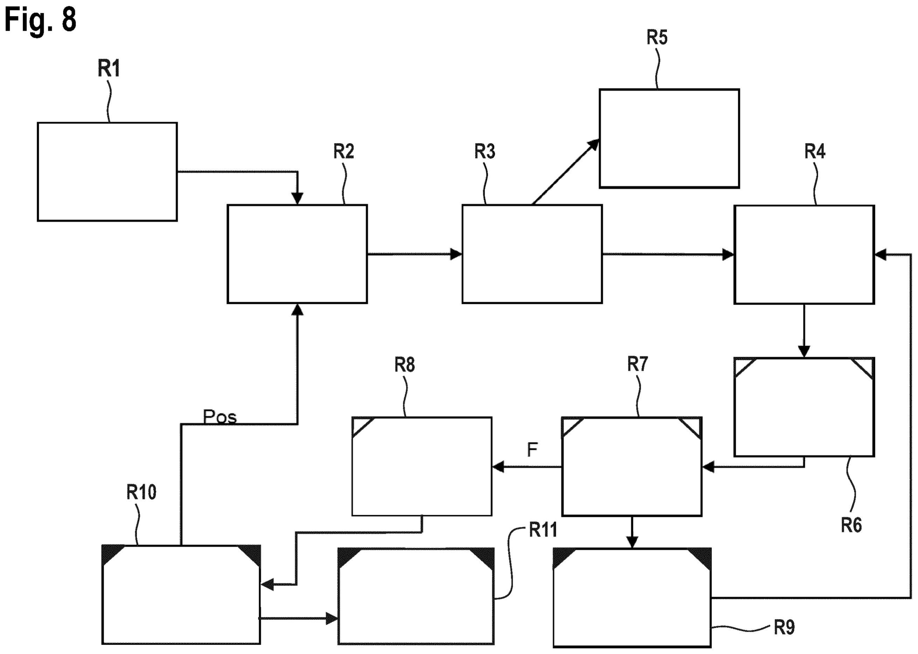

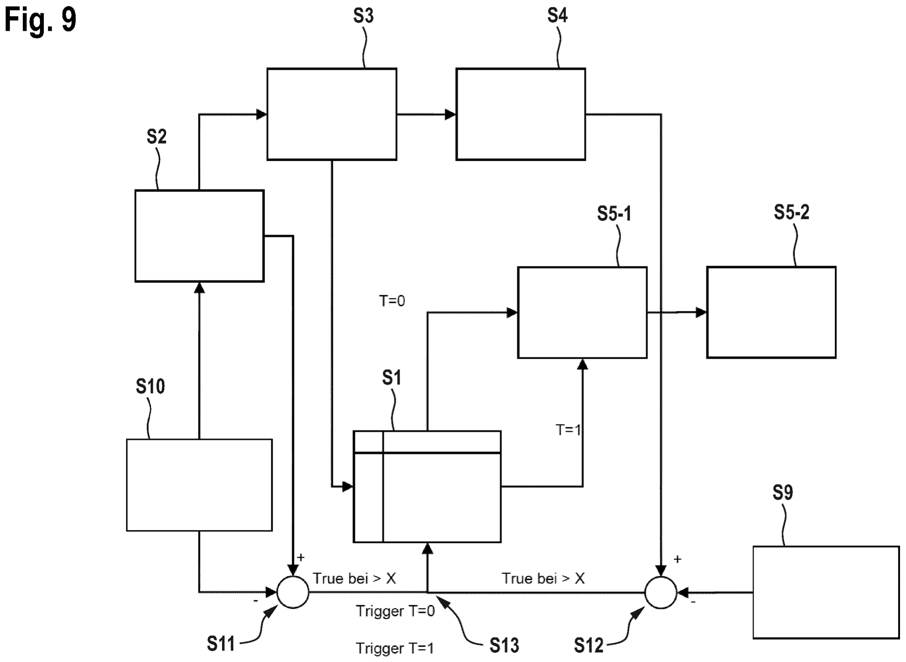

Die Figuren 8 und 9 zeigen in Form von Blockdiagrammen verschiedene Regelkonzepte, die bei Ausführungsformen des erfindungsgemäßen Verfahrens zum Transportieren eines Gutes verwendet werden können.

Bei der Ausführungsform gemäß Figur 8 erfolgt zunächst unter Berücksichtigung eines Bewegungsbefehls gemäß Schritt R1 eine entsprechende Wegvorgabe gemäß Schritt R2 und eine Kraftvorgabe gemäß Schritt R3 im Hinblick auf sechs Freiheitsgrade der Bewegung des Bewegers 110 als Träger 10 in Wechselwirkung mit dem Stator 120. Unter Berücksichtigung einer Stromvorgabe gemäß Schritt R4 erfolgt dann im Zusammenhang mit einer Strommessung gemäß Schritt R9 und einer Positionsmessung gemäß Schritt R10 unter Ansteuerung über einen Endstufenschritt R6 zur Beaufschlagung der zweiten Magnetfeldeinrichtungen 121 und insbesondere der Spulenanordnungen 20 gemäß Schritt R7 eine Krafterzeugung gemäß Schritt R8, die rückgekoppelt zu einer Aufrechterhaltung des Bewegungszustandes des Bewegers 110 als Träger 10 und insbesondere zum Konstanthalten des Abstandes zwischen Träger 10 und Referenzfläche 122 führt.

Beim Schritt R1 kann eine Anregung gemäß

$$A(t) = A_0 \cdot \cos(\omega \cdot t)$$

erfolgen, so dass im Schritt R11 das Frequenzvberhalten und daraus die Masse ermittelt werden kann.

In diesem Zusammenhang kann über die ausgeübte zusätzliche Kraft, vermittelt durch den zusätzlich aufzubringenden Strom, nach Kalibrierung und Eichung, welche vorab erfolgen, die Masse des Gutes 50 im Behälter 11 auf dem Träger 10 ermittelt werden.

Figur 9 zeigt eine alternative Ausgestaltung des Regelverfahrens unter Berücksichtigung eines Speichervorgangs S1 und einer Kraftdifferenzberechnung gemäß Schritt S5-1 mit Ableitung des Gewichts als Betrag der Kraft im Berechnungsschritt S5-2, wobei wieder gemäß Schritt S2 eine Wegvorgabe, gemäß Schritt S3 eine Kraftvorgabe in sechs Freiheitsgraden sowie gemäß Schritt S4 eine Stromvorgabe mit Strommessung im Schritt S9 und Positionsmessung im Schritt S10 zu berücksichtigen sind.

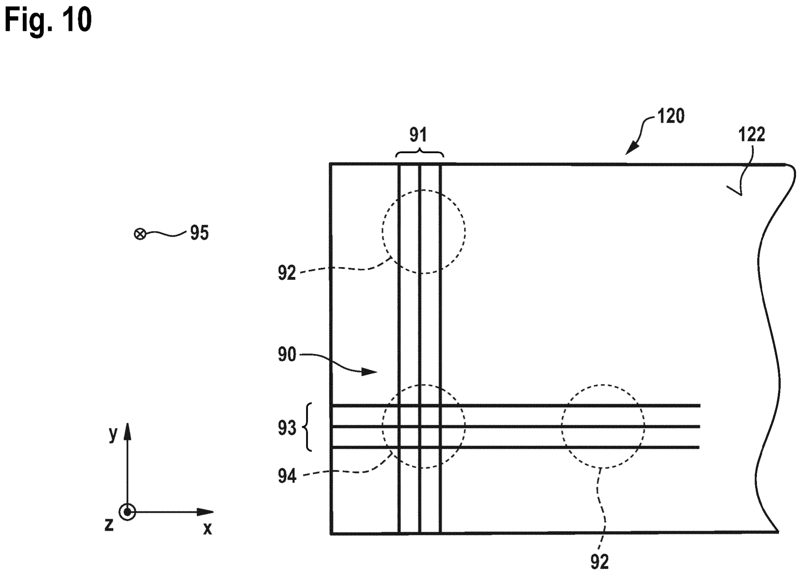

Die Figuren 10 bis 13 zeigen Ausführungsformen eines erfindungsgemäßen mehrdimensionalen Antriebs 100 mit spezieller Ausgestaltung des dort zu Grunde liegenden Stators 120 und dessen Oberseite 122 als Referenzfläche.

Allgemein sollte der Arbeitspunkt für die Messung so gewählt werden, dass eine kleine Änderung in der Kraft oder Belastung zu eine großen Änderung in der zu Grunde gelegten Messgröße führt, z.B. eine Stromänderung.

Bei dieser Ausführungsform weist die Oberfläche 122 des Stators 120 ein Lageranordnung 90 mit Lagern 91 und 93 in der x-Richtung bzw. in der y-Richtung auf, die für sich genommen Loselager 92 bilden und sich im Bereich, wo sie sich überkreuzen oder schneiden, ein Festlager 94 generieren. Die Verwendung einer derartigen Lageranordnung 90 kann dazu beitragen, die Messgenauigkeit bei der Bestimmung der Masse oder des Gewichts des zu Grunde liegenden Gutes 50 zu erhöhen.

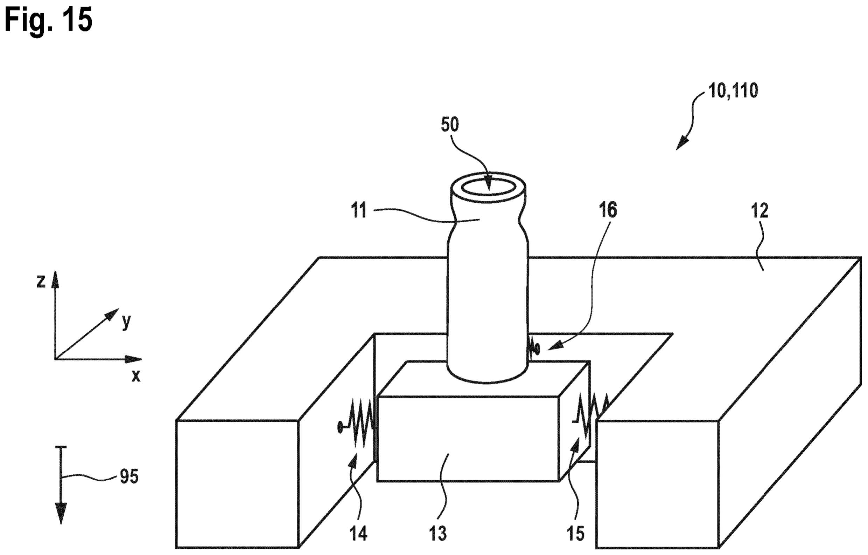

Im Zusammenhang mit einer Weiterbildung der vorliegenden Erfindung ist es auch denkbar, einen Beweger 110 als Träger 10 für ein Gefäß 11 und ein darin aufzunehmendes Gut 50 gemäß Figur 15 auszugestalten. Dabei weist der Träger 10 ein Hauptteil 12 als Rahmen und einen Schwingkörper 13 als eigentlichen Träger für den Behälter 11 auf. Der Schwingkörper 13 ist über elastische Aufhängungen 14, 15 und 16, zum Beispiel über Federelemente, mit dem Innenrahmen des Hauptteils 12 elastisch verbunden. Auf diese Weise kann der Schwingkörper 13 im Zusammenhang mit Behälter 11 und Gut 50 einerseits und dem Hauptteil 12 andererseits in Schwingungen versetzt werden.

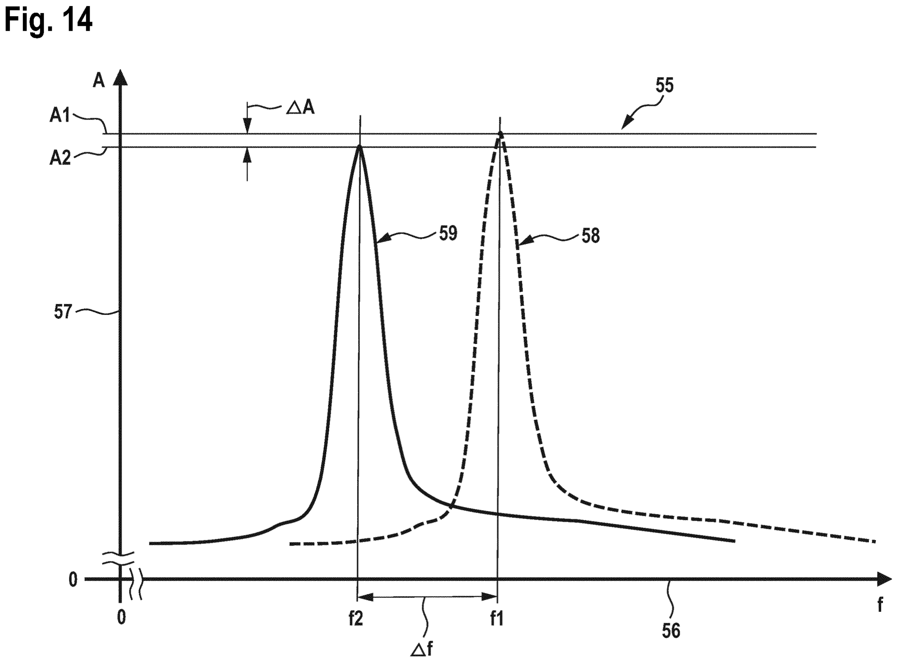

Figur 14 zeigt in Form eines Graphen 55 das Amplitudenspektrum eines derartigen schwingungsfähigen Systems aus Hauptteil 12 und Schwingkörper 13.

Auf der Abszisse 56 ist die Schwingungsfrequenz f und auf der Ordinate 57 die Amplitude A aufgetragen.

Für das in Figur 15 gezeigte System des Bewegers 110 als Träger 10 ergibt sich der Verlauf gemäß Spur 58, falls der Behälter 11 nicht mit einem Gut 50 befüllt ist. Es ergibt sich die übliche Resonanzkurve mit einer Frequenz f1, bei welcher die Amplitude A bei einem ersten maximalen Wert A1 liegt.

Nach dem Befüllen des Behälters 11 mit dem Gut 50 ergibt sich ein Spektrum gemäß der Spur 59. Die maximale Amplitude liegt bei einem geringeren Wert A2, zum Beispiel auf Grund von Dämpfung, und dies bei einer abgesenkten Frequenz f2.

Aufgrund des üblichen Zusammenhangs gemäß der nachfolgenden Beziehung (1)

$$f_G = \frac{1}{2\pi} \cdot \sqrt{\frac{c_{ax}}{m}} \quad , \qquad\qquad (1)$$

kann auf den Massenzuwachs und somit auf das Gewicht oder die Masse des zugeführten Gutes 50 geschlossen werden. Dabei ist m die Gesamtmasse des Bewegers 100 als Träger, also unter Berücksichtigung seiner eigene Masse und ggf. des Masse von Gefäß 11 und Gut 50, ggf. auch unter Berücksichtigung der Masse des Schwingkörpers 13, wenn diese ermittelt werden kann. Sind z.B. die Resonanzfrequenzen im beladen und im unbeladenen Zustand bekannt des Bewegers 110 bekannt, so kann über den Zusammenhang (1) und einer Differenzrechnung auf die Masse des Gutes 50 geschlossen werden, wenn der Parameter $c_{ax}$ zur Beschreibung des Schwingfähigkeit des Bewegers 110 bekannt ist.

Diese und weitere Merkmale und Eigenschaften der vorliegenden Erfindung werden an Hand der folgenden Darlegungen weiter erläutert:

Es sind Systeme bekannt und im Einsatz, die entweder die Funktion des Transportierens oder aber die Funktion des Wiegens realisieren. Es handelt sich also dabei entweder um Transportsysteme oder um Wiegesysteme als solche.

Daraus ergibt sich herkömmlicherweise die Anforderung, für einen Wiegevorgang das zu wiegende Gut aus dem Transportsystem entnehmen und in ein Wiegesystem einführen und dort auf einer Wiegeeinrichtung platzieren zu müssen.

Bei Schüttgütern oder Fließgütern ist zudem ein Behälter erforderlich, welcher das Gut aufnehmen kann und sowohl auf dem Transportsystem als auch auf dem Wiegesystem platziert werden kann. In diesem Fall muss das Leergewicht des Behälters bekannt sein, um das tatsächliche Gewicht des Gutes ermitteln zu können.

Zudem sind bekannte Wiegesystem und insbesondere Waagen in ihrer Funktion eindimensional. Das bedeutet für den Betrieb und für die Installation, dass nur die Kräfte gemessen werden können, welche parallel zu einer Messachse verlaufen. Winkelfehler führen direkt zu einer Verfälschung des Ergebnisses.

Gemäß der vorliegenden Erfindung wird die Funktion des Transportierens mit der Funktion des Wiegens verbunden.

Da während des Wiegevorgangs stets eine Kraftüberwachung vorhanden ist, kann im Fall von Schüttgütern oder Fließgütern während des Dosierens auch eine Differenzwiegung erfolgen. Damit wird nur das Gewicht des Schüttgutes oder Fließgutes erfasst, nicht aber das von Hilfseinrichtungen, wie Behälter oder andere Bauteile.

Auch spielen Masse- oder Gewichtsschwankungen der Peripherie keine Rolle, da nur die Kraftänderung durch das zu dosierte Material erfasst wird. Somit sind beliebig viele Referenzpunkte erfassbar, zu welchen eine Masse- oder Gewichtsänderung erfasst werden kann.

Dies ist insbesondere dann vorteilhaft, wenn mehrere Schütt- oder Fließgüter in einen Container dosiert werden sollen und sowohl das Gesamtgewicht oder die Gesamtmasse wie auch die Einzelgewichte oder -massen der einzelnen Bestandteile erfasst werden sollen.

Bei Stückgütern kann nach der Platzierung des Gutes auf dem Transportsystem die Belastungsänderung erfasst und damit auf das Stückgewicht des Gutes geschlossen werden.

Somit ergibt sich z.B. die Möglichkeit, Bauteilanwesenheiten zu überwachen und damit auch bei kleinen Teilen, welche innerhalb einer Baugruppe verbaut werden und welche am fertigen Produkt nicht mehr sichtbar sind, den Montagenachweis zu führen.

Durch die vorhandene Kraftregelung in allen Raumrichtungen wird eine Kraftänderung - z.B. durch eine Gewichtszunahme beim Dosieren - auch in allen Raumrichtungen aufgenommen. Eine Ausrichtung der Waage zum Kraftfeld der Erde ist nicht notwendig, da dies im Ergebnis nur zum einem mehrdimensionalen Kraftvektor führt, der im Betrag die Verwiegung darstellt.

Es ist ein Kernaspekt der vorliegenden Erfindung, ein kontaktfreies und insbesondere schwebendes Transportsystem zu schaffen, welches vorzugsweise sechs Freiheitsgrade aufweist.

Durch die freie Regelung aller sechs Raumrichtungen wird stets ein Kraftgleichgewicht erzeugt, im Wesentlichen um eine vorgegebene Position im Raum zu erreichen oder aufrecht zu erhalten.

Werden die äußeren Belastungen oder Krafteinwirkungen ausgeschaltet und z.B. durch Dosieren eines Schütt- oder Fließgutes auf den Träger eine Kraftänderung herbeigeführt, so ist die Kraftänderung äquivalent zum zudosierten Gewicht oder gibt zumindest ein Maß für das zudosierte Gewicht an.

Wird die Kraft- bzw. Positionsregelung hinreichend genau ausgelegt, können hier Wiegeergebnisse erzielt werden, welche neben kleinen Bauteilen auch Schütt- oder Fließgüter hoch auflösen.

Kernkomponenten für eine genaue Verwiegung sind zum einen eine gute Systemkenntnis und zum anderen eine räumliche Trennung von Störungen, z.B. hinsichtlich starke Luftströmungen oder ähnlichem. Weiter spielen die Genauigkeit des Messsystems, z.B. bei der Positionsbestimmung, und die Genauigkeit der Stromregelung eine maßgebliche Rolle. Da die Stromänderung gegenüber der Kraftänderung nicht linear verläuft, werden vorteilhafterweise Messvorgänge gezielt in den hierfür passenden Arbeitspunkt gelegt, um eine möglichst große Stromänderung bei einer möglichst kleinen Kraftänderung zu erzielen. Dies wird tendenziell bei großer Flughöhe erreicht. Dabei ist jedoch sicherzustellen, dass die Messauflösung nicht gegenläufig skaliert.

Da eine Messung nicht immer notwendig ist, kann das System ggf. in zwei Varianten ausgeführt werden.

Bei der normalen Ausführung ergibt sich eine etwas geringere Messgenauigkeit. Dies kann z.B. bei einem einfachen Anwesenheitsnachweis genutzt werden oder, um grobe Abschätzungen des Gewichts zu erhalten.

Bei der Notwendigkeit einer höheren Genauigkeit können über ein verbessertes Messsystem und eine angepasste Leistungselektronik die notwendige Messauflösung und damit eine gesteigerte Genauigkeit realisiert werden.

Die vorgestellte erfindungsgemäße Wiegetechnologie weist die Besonderheit auf, dass unabhängig von der Ausrichtung immer das Gewicht über alle drei translatorischen Achsen ermittelt werden kann. Damit entfällt die Ausrichtung gegenüber dem Schwerkraft- oder Gravitationsvektor.

Da das erfindungsgemäße Antriebsprinzip die Schwerkraft lediglich als eine äußere Kraftkomponente ausweist, ist ein Betrieb sowohl in vertikaler wie auch in horizontaler Anordnung realisierbar.

Die Dauermagnete des Trägers oder Carriers sorgen in Verbindung mit den geregelten Magnetfeldern des Stators zu einer resultierenden Kraft, welche den Träger oder Carrier entsprechend des Betrages und der Richtung bewegen kann. Es sind andere Prinzipien anwendbar.

Wird der Antrieb in der Positionsregelung betrieben, führt eine Änderung der äußeren Kraft zu einer kleinen Positionsabweichung, welche eine Nachregelung erfordert und eine entsprechende Änderung der Spulenströme zur Folge hat, um wieder ein Kräftegleichgewicht zu erreichen.

Dabei kann die notwendige Gegenkraft über den Spulenstrom ermittelt und als Messgröße ausgegeben werden.

Horizontales Wiegen

Der Träger oder Carrier läuft entlang oder in einer horizontalen Ebene, z.B. der xy-Ebene. Ein Zudosieren führt zu einer Kraftänderung senkrecht zur xy-Ebene, also in z-Richtung, sofern die Kraftänderung im Schwerpunkt eingebracht wird.

Außermittige Kräfte führen zu einem Moment um die x- bzw. y-Achse. Je nach finalem Kennfeld des Antriebes kann ein großer Hebel zum Schwerpunkt sinnvoll sein, um die Auflösung und damit die Genauigkeit des Systems zu erhöhen.

Vertikales Wiegen

Wird der Träger oder Carrier entlang einer Wand gefahren, z.B. parallel zur xz- oder yz-Ebene, so hat eine Zudosierung eine Kraftänderung in y- und eine Momentänderung in x- und ggf. z-Richtung zur Folge.

Auch hier kann sich ein großer Hebel bezahlt machen, wenn eine größere Auflösung damit Genauigkeit gefordert wird.

Insbesondere wenn eine solche Wiegevorrichtung mit einer vertikalen Schlauchbeutelmaschine kombiniert wird, ergibt sich die Möglichkeit, dass nicht wie heute üblich oberhalb der VFFS, sondern neben der Maschine die Verwiegung stattfinden kann. Weiter sind hier auch Mehrfachwiegungen z.B. das Zudosieren unterschiedlicher Schütt- oder Fließgüter denkbar.

Damit kann eine aufwendige Vormischung mit der Gefahr des Entmischens umgangen werden.

Auch können personalisierte Produktabfüllung so ohne Mehraufwand realisiert werden. Der Carrier fährt der Reihe nach die unterschiedlichen Zuführungen an und bekommt nach Auftrag die passende Menge zudosiert. Sind alle erforderlichen Dosierungen abgeschlossen, wird das verwogene Füllgut über das Formrohr gefahren und kann schnell mit geringer Fallhöhe an die Schlauchbeutelmaschine übergeben werden.

Hierbei wird eine Position X von dem Transportsystem angefahren und gehalten, dies entsprich in den Figuren 8 und 9 der Wegvorgabe. Wird nun die Position X festgehalten, ergibt sich eine typische Kraftvorgabe, welche damit das Taragewicht repräsentiert, und zwar gemäß dem Trigger von Positionsmessung in Figur 9. Kommt es nun auf Grund eines Dosiervorgangs zu einer Massen- und Gewichtsänderung ändert sich die Kraftvorgabe. Diese ist proportional zu den Änderungen in den elektrischen Strömen, die notwendig sind, um die Position X weiterhin sicher zu stellen. Dieses Delta - ggf. in drei Dimensionen - stellt damit die Maßverkörperung der Masse oder des Gewichtes dar, der Betrag dieses Vektors ist damit das Gewicht.

Soll eine Gewichtsüberwachung realisiert werden, so ist im leeren Zustand der Träger, Carrier oder Mover einmalig in der Position X zu vermessen und diese Kraftvorgabe zu speichern.

Damit kann zu jedem späteren Zeitpunkt eine Differenzmessung erfolgen, wenn wieder in der Position X die Kraftvorgabe im Stillstand ermittelt wird.

Denkbar ist auch, die Messung unabhängig vom Ort und damit die Taramessung in der Position X und die Nettomessung in der Position Y durchzuführen. Hierbei kann es allerdings zu Ungenauigkeiten kommen, da an der anderen Position veränderte Rahmenbedingungen vorliegen können. Es ist daher von Vorteil, in diesem Fall vorab eine Kalibrierung vorzunehmen, welche örtliche Schwankungen durch den Aufbau berücksichtigt.

Insbesondere sind hier die Induktivität zu nennen, wie auch die Charakteristik der beteiligten Elektronik, und alle Baugruppen der elektromagnetischen Energiewandlung.

Kalibrierung

Sollen mit unterschiedlichen Bauteilen - also Statoren und Träger - vergleichbare Messungen durchgeführt werden, ist ein umfangreiches Kalibierkonzept vorteilhaft.

Dabei können folgende Parameter berücksichtigt werden:

- Magnetfeldverteilung auf dem Träger oder Mover: Schwankungen wirken sich direkt auf die notwendige Stromvorgabe aus. Damit ist eine präzise Kenntnis notwendig, um die Regelung in diesem Bereich durch die Vorhersage des Schwingverhaltenes zu verbessern.

- Vermessung des Spulenfeldes: Auch hier kommt es durch die Fertigung sowohl der Spulen selbst wie auch durch die Toleranzen der elektronischen Bauteile bei gleicher Sollwertvorgabe zu unterschiedlichem Verhalten. Dies ist präzise zu vermessen und als Korrekturwert für die Steuerung verfügbar zu machen.

- Insbesondere Schwingung sowohl des Trägers oder Movers wie auch des Stators können die Genauigkeit erheblich beeinflussen. Eine Überwachung der Schwingung selbst durch lokale Sensorik und damit direkte Korrektur der Gewichtsbestimmung können dieses Problem erheblich reduzieren.

- Bei konventionellen Positionsregelungen wird eine hohe Steifigkeit zwischen Stator und Rotor angestrebt. Das führt zwangsläufig zu einem Übertragung der Schwingung des Stators auf den Rotor. Da dieser bereits durch seine eigene Messe eine Dämpfung hat, sollten hier die Regelparameter für den Messbetrieb entsprechend angepasst werden.

- Zusätzliche Umfeldsensorik kann hier maßgeblich zur Steigerung der Genauigkeit herangezogen werden. Zu nennen sind Temperatur, Luftfeuchtigkeit, Höhe über Meer etc.

Maßnahmen zur Steigung der Genauigkeit

Neben den Maßnahmen aus dem Bereich der Kalibrierung können weitere Maßnahmen zur Steigerung der Genauigkeit heran gezogen werden:

- Durch das Bereitstellen von einem Auflager, welches keine Störkräfte in den Träger einleitet, kann die Messung auf eine Momentenmessung umgeleitet werden. Dies hat insbesondere bei kleinen Gewichten den Vorteil, dass die Genauigkeit weiter gesteigert werden kann, wie dies exemplarisch in den Figuren 10 bis 13 dargestellt ist.
- Da sich die Frequenz des Gesamtaufbaus durch folgende Gleichung (1) beschreibt

$$f_G = \frac{1}{2\pi} \cdot \sqrt{\frac{c_{ax}}{m}} \ , \qquad\qquad (1)$$

kann es von Interesse sein, durch die geschickte Auslegung von $c_{ax}$ das Schwingverhalten ebenfalls als Maßverkörperung heran zu ziehen. Die Resonanzfrequenz $f_G$ wird durch die Analyse der Schwingungsfrequenz f der elektrischen Ströme durch das System selbst ermittelt. Ziel ist dabei, dass eine kleine Änderung der Masse m sich in $f_G$ widerspiegelt, wie dies im Zusammenhang mit den Figuren 14 und 15 gezeigt ist. Wird dieses Kriterium neben der bereits beschriebenen Kraftvorgabe ausgewertet, wird die Sicherheit der Gewichtsschätzung deutlich gesteigert.

**Patentansprüche**

1. Verfahren zum Transportieren eines Gutes (50) mittels eines mehrdimensionalen Antriebs (100), welcher ausgebildet ist mit:

   - einem Stator (120) mit einer ersten Magneteinrichtung (121) zum Erzeugen eines ersten Magnetfeldes und
   - einem Beweger (110), welcher eine zweite Magneteinrichtung (111) zur Erzeugung eines zweiten Magnetfeldes zur magnetischen Wechselwirkung mit dem vom Stator (120) erzeugbaren ersten Magnetfeld aufweist und welcher einen Träger (10) und/oder einen Behälter (11) für ein zu transportierendes Gut (50) aufweist oder bildet, und bei welchem durch die magnetische Wechselwirkung der Beweger (110) relativ zum Stator (120) berührungsfrei und steuerbar bewegbar ist, wobei durch die magnetische Wechselwirkung eine gesteuerte Bewegung des Bewegers (110) in einer xy-Ebene mit steuerbarem Abstand zu einer Referenzfläche (122) ermöglicht wird, wobei bei dem Verfahren:

      - der Träger (10) zur Aufnahme und zum Tragen des Gutes (50) verwendet wird,
      - mindestens eine für einen Bewegungszustand des Trägers (10) repräsentative Größe und dadurch der Bewegungszustand des Trägers (10) mit und ohne Gut (50) erfasst wird,
      - vor, während und/oder nach einem Transportvorgang des Trägers (10)

         (a) aus einer für eine Änderung des Bewegungszustandes des Trägers (10) repräsentativen Größe und/oder
         (b) aus einer für ein Mittel zum Erreichen und/oder zum Erhalten eines Bewegungszustandes des Trägers (10) mit und ohne Gut (50) repräsentativen Größe

      die Masse des Gutes (50) bestimmt wird, wobei ein Bewegungszustand
      - ein Zustand mit konstanter Geschwindigkeit des Trägers (10) parallel zu einer Referenzfläche (122),
      - ein Schwingungszustand, bei welchem zumindest das Gut (50), insbesondere linear, in einer Ebene parallel zu einer Referenzfläche (122) um eine Ruhelage schwingt,

   oder eine Kombination daraus ist.

2. Verfahren zum Transportieren eines Gutes (50) nach Anspruch 1, bei welchem der Bewegungszustand weiter eine Kombination mit einem Zustand der Ruhe des Trägers (10) in Bezug auf mindestens eine Referenzfläche (122) und insbesondere ein Zustand mit konstantem Abstand zwischen Träger (10) und Referenzfläche (122), ist.

**3.** Verfahren zum Transportieren eines Gutes (50) nach Anspruch 1 oder 2, bei welcher

(a) die für einen Bewegungszustand des Trägers (10) oder für dessen Änderung repräsentative Größe und/oder
(b) die für ein Mittel zum Erreichen und/oder zum Erhalten eines Bewegungszustandes des Trägers (10) mit und ohne Gut (50) repräsentativen Größe

ein Abstand, eine Abstandsänderung, eine Geschwindigkeit, eine Geschwindigkeitsänderung, eine Beschleunigung, eine Kraft, eine für eine Kraft ursächliche Größe, insbesondere eine magnetische Flussdichte, eine elektrische Stromstärke oder deren zeitliche Änderung ist.

**4.** Verfahren zum Transportieren eines Gutes (50) nach einem der vorangehenden Ansprüche, bei welcher die für einen Bewegungszustand des Trägers (10) oder für dessen Änderung repräsentative Größe eine Regelgröße oder eine für eine Regelgröße eines zu Grunde liegenden Regelkreises zum Erreichen und/oder zum Erhalten eines Bewegungszustandes des Trägers (10) mit und ohne Gut (50) repräsentative Größe ist.

**5.** Verfahren zum Transportieren eines Gutes (50) nach einem der vorangehenden Ansprüche, bei welcher die für ein Mittel zum Erreichen und/oder zum Erhalten eines Bewegungszustandes des Trägers (10) oder für dessen Änderung repräsentative Größe eine Stellgröße oder eine für eine Stellgröße eines zu Grunde liegenden Regelkreises zum Erreichen und/oder zum Erhalten eines Bewegungszustandes des Trägers (10) mit und ohne Gut (50) repräsentative Größe ist.

**6.** Mehrdimensionaler Antrieb (100), insbesondere einen Antrieb mit sechs Freiheitsgraden und/oder Planarantrieb, welcher ausgebildet und eingerichtet ist, ein Verfahren zum Transportieren eines Gutes (50) nach einem der Ansprüche 1 bis 5 auszuführen.

**7.** Mehrdimensionaler Antrieb (100) nach Anspruch 6, mit:

- einem Stator (120) mit einer ersten Magneteinrichtung (121) zum Erzeugen eines ersten Magnetfeldes und
- einem Beweger (110), welcher eine zweite Magneteinrichtung (111) zur Erzeugung eines zweiten Magnetfeldes zur magnetischen Wechselwirkung mit dem vom Stator (120) erzeugbaren ersten Magnetfeld aufweist und welcher einen Träger (10) und/oder einen Behälter (11) für ein zu transportierendes Gut (50) aufweist oder bildet,

bei welcher durch die magnetische Wechselwirkung der Beweger (110) relativ zum Stator (120) berührungsfrei und steuerbar bewegbar ist.

**8.** Mehrdimensionaler Antrieb (100) nach einem der Ansprüche 6 oder 7, mit einer Erfassungseinheit (60), welche zum Erfassen

(a) einer für eine Änderung des Bewegungszustandes des Trägers (10) repräsentativen Größe und/oder
(b) einer für ein Mittel zum Erreichen und/oder zum Erhalten eines Bewegungszustandes des Trägers (10) mit und ohne Gut (50) repräsentativen Größe

ausgebildet und eingerichtet ist und dazu insbesondere mindestens eine Sensoreinheit (61, 62) aufweist.

**9.** Mehrdimensionaler Antrieb (100) nach einem der Ansprüche 6 bis 8, mit einer Auswerte- und Steuereinheit (40), welche zum Aufnehmen

(a) einer für eine Änderung des Bewegungszustandes des Trägers (10) repräsentativen Größe und/oder
(b) einer für ein Mittel zum Erreichen und/oder zum Erhalten eines Bewegungszustandes des Trägers (10) mit und ohne Gut (50) repräsentativen Größe

ausgebildet und eingerichtet ist und dazu insbesondere über eine Steuer- und Messleitungen (42) mit einer Sensoreinheit (61, 62) verbunden und/oder zur Steuerung des Stators (120) und/oder des Bewegers (110) ausgebildet ist.

10. Verarbeitungsvorrichtung (1) zum Verarbeiten eines Gutes (5) und insbesondere Schlauchbeutelanlage, mit einem mehrdimensionalen Antrieb (100) nach einem der Ansprüche 6 bis 9, welche ausgebildet und eingerichtet ist zum Transportieren eines Guts (50) mittels eines Bewegers (110) als Träger (10) des Guts (50), insbesondere als ein oder mit einem Behälter (11).

**Claims**

1. Method for transporting a commodity (50) by means of a multidimensional drive (100), which is designed with:

   - a stator (120) with a first magnet device (121) for generating a first magnetic field, and
   - a mover (110), which has a second magnet device (111) for generating a second magnetic field for magnetic interaction with the first magnetic field that can be generated by the stator (120), and which has or forms a carrier (10) and/or a container (11) for a commodity (50) to be transported,
   and in which the mover (110) can be moved relative to the stator (120) in a contact-free and controllable manner, wherein the magnetic interaction enables a controlled movement of the mover (110) in an xy plane at a controllable distance from a reference surface (122),
   wherein, in the method:

      - the carrier (10) is used to receive and carry the commodities (50),
      - at least one parameter representing a movement state of the carrier (10) and thereby the movement state of the carrier (10) with and without commodities (50) is detected,
      - before, during, and/or after a transport process of the carrier (10)

         (a) from a parameter representing a change in the state of motion of the carrier (10) and/or
         (b) from a parameter representing a means for achieving and/or maintaining a state of motion of the carrier (10) with and without commodities (50),

      the mass of the commodities (50) is determined, wherein a state of motion is
      - a state with constant speed of the carrier (10) parallel to a reference surface (122),
      - an oscillation state in which at least the commodities (50) oscillate, in particular linearly, in a plane parallel to a reference surface (122) about a rest position,

      or a combination thereof.

2. Method for transporting a commodity (50) according to claim 1, in which the state of movement is further a combination of a state of rest of the carrier (10) in relation to at least one reference surface (122) and, in particular, a state with a constant distance between the carrier (10) and the reference surface (122).

3. Method for transporting a commodity (50) according to claim 1 or 2, in which

   (a) the parameter representing a state of motion of the carrier (10) or of a change therein and/or
   (b) the parameter representing a means for achieving and/or maintaining a state of motion of the carrier (10) with and without commodities (50) is

   a distance, a change in distance, a speed, a change in speed, an acceleration, a force, a quantity causing a force, in particular a magnetic flux density, an electric current or its change over time.

4. Method for transporting a commodity (50) according to one of the preceding claims, in which the parameter representing a state of motion of the carrier (10) or of a change therein is a control variable or a parameter representing a control variable of an underlying control loop for achieving and/or maintaining a state of motion of the carrier (10) with and without commodities (50).

5. Method for transporting a commodity (50) according to one of the preceding claims, in which the parameter representing a means for achieving and/or maintaining a state of motion of the carrier (10) or for changing it is a control variable or a parameter representing a control variable of an underlying control loop for achieving and/or maintaining a state of motion of the carrier (10) with and without commodities (50).

6. Multidimensional drive (100), in particular a drive with six degrees of freedom and/or a planar drive, which is designed and configured to perform a method for transporting a commodity (50) according to one of claims 1 to 5.

7. Multidimensional drive (100) according to claim 6, comprising:

- a stator (120) with a first magnet device (121) for generating a first magnetic field, and
- a mover (110) which has a second magnet device (111) for generating a second magnetic field for magnetic interaction with the first magnetic field that can be generated by the stator (120) and which has or forms a carrier (10) and/or a container (11) for a commodity (50) to be transported,

in which the magnetic interaction allows the mover (110) to be moved relative to the stator (120) in a contact-free and controllable manner.

8. Multidimensional drive (100) according to one of claims 6 or 7, with a detection unit (60) which is designed and set up to detect

(a) a parameter representing a change in the movement state of the carrier (10) and/or
(b) a parameter representing a means for achieving and/or maintaining a state of motion of the carrier (10) with and without commodities (50),

and for this purpose, in particular has at least one sensor unit (61, 62).

9. Multidimensional drive (100) according to one of claims 6 to 8, with an evaluation and control unit (40) which is designed and set up to receive

(a) a parameter representing a change in the movement state of the carrier (10) and/or
(b) a parameter representing a means for achieving and/or maintaining a state of motion of the carrier (10) with and without commodity (50),

and is connected in particular via control and measurement lines (42) to a sensor unit (61, 62) and/or is designed to control the stator (120) and/or the mover (110).

10. Processing device (1) for processing a commodity (5) and in particular a tubular bag system,
with a multidimensional drive (100) according to one of claims 6 to 9, which is designed and set up to transport a commodity (50) by means of a mover (110) as a carrier (10) of the commodity (50), in particular as or with a container (11).

**Revendications**

1. Procédé de transport d'une charge (50) au moyen d'un entraînement multidimensionnel (100), lequel est doté de:

- un stator (120) avec une première unité magnétique (121) pour générer un premier champ magnétique et
- un déplaceur (110) qui comporte une deuxième unité magnétique (111) pour générer un deuxième champ magnétique en interaction magnétique avec le premier champ magnétique pouvant être généré par le stator (120), et qui comporte ou forme un support (10) et/ou un récipient (11) pour une charge (50) à transporter, et dans lequel, grâce à l'interaction magnétique, le déplaceur (110) peut se déplacer sans contact et est contrôlable par rapport au stator (120), l'interaction magnétique permettant un mouvement contrôlé du déplaceur (110) dans un plan xy avec une distance contrôlable par rapport à une surface de référence (122), dans le procédé:

- le support (10) est utilisé pour recevoir et porter la charge (50),
- au moins une grandeur représentative d'un état de mouvement du support (10) est mesurée, permettant ainsi de détecter l'état de mouvement du support (10) avec et sans charge (50),
- avant, pendant et/ou après un processus de transport du support (10)

(a) à partir d'une grandeur représentative d'une modification de l'état de mouvement du support (10) et/ou

(b) à partir d'une grandeur représentative d'un moyen destiné à atteindre et/ou à maintenir un état de mouvement du support (10) avec et sans charge (50)

la masse de la charge (50) est déterminée, auquel cas un état de mouvement
- un état à vitesse constante du support (10) parallèle à une surface de référence (122),
- un état de vibration, dans lequel au moins la charge (50), en particulier de manière linéaire, oscille dans un plan parallèle à une surface de référence (122) autour d'une position d'équilibre,

ou une combinaison de ces états.

2. Procédé de transport d'une charge (50) selon la revendication 1, dans lequel l'état de mouvement est en outre une combinaison avec un état de repos du support (10) vis-à-vis d'au moins une surface de référence (122) et, en particulier, un état présentant une distance constante entre le support (10) et la surface de référence (122).

3. Procédé de transport d'une charge (50) selon la revendication 1 ou 2, dans lequel

(a) la grandeur représentative d'un état de mouvement du support (10) ou de sa variation et/ou
(b) la grandeur représentative d'un moyen destiné à atteindre et/ou à maintenir un état de mouvement du support (10) avec et sans charge (50)

il s'agit d'une distance, d'une variation de distance, d'une vitesse, d'une variation de vitesse, d'une accélération, d'une force, d'une grandeur causale à une force, en particulier d'une densité de flux magnétique, d'une intensité de courant électrique ou de leur variation temporelle.

4. Procédé de transport d'une charge (50) selon l'une quelconque des revendications précédentes, dans lequel la grandeur représentative d'un état de mouvement du support (10) ou de sa variation est une variable de régulation ou une grandeur représentative d'une variable de régulation d'une boucle de régulation sous-jacente destinée à atteindre et/ou maintenir un état de mouvement du support (10) avec et sans charge (50) .

5. Procédé de transport d'une charge (50) selon l'une des revendications précédentes, dans lequel la grandeur représentative d'un moyen destiné à atteindre et/ou à maintenir un état de mouvement du support (10) ou à en provoquer la modification est une variable de commande ou une grandeur représentative d'une variable de commande d'une boucle de régulation sous-jacente destinée à atteindre et/ou à maintenir un état de mouvement du support (10) avec et sans charge (50).

6. Entraînement multidimensionnel (100), en particulier un entraînement à six degrés de liberté et/ou un entraînement planaire, conçu et configuré pour exécuter un procédé de transport d'une charge (50) selon l'une des revendications 1 à 5.

7. Entraînement multidimensionnel (100) selon la revendication 6, avec:

- un stator (120) avec une première unité magnétique (121) pour générer un premier champ magnétique et
- un déplaceur (110), qui comporte une deuxième unité magnétique (111) pour générer un deuxième champ magnétique destiné à une interaction magnétique avec le premier champ magnétique généré par le stator (120) et qui comporte ou forme un support (10) et/ou un récipient (11) pour une charge (50) à transporter,

dans lequel, grâce à l'interaction magnétique, le déplaceur (110) est mobile sans contact et contrôlable par rapport au stator (120).

8. Entraînement multidimensionnel (100) selon l'une des revendications 6 ou 7, avec une unité de détection (60) destinée à détecter

(a) une grandeur représentative d'une modification de l'état de mouvement du support (10) et/ou
(b) une grandeur représentative d'un moyen destiné à atteindre et/ou à maintenir un état de mouvement du support (10) avec et sans charge (50)

est conçu et configuré et comprend, en particulier, au moins une unité de capteurs (61, 62).

**9.** Entraînement multidimensionnel (100) selon l'une des revendications 6 à 8, avec une unité d'évaluation et de commande (40), destinée à l'enregistrement

(a) d'une grandeur représentative d'une modification de l'état de mouvement du support (10) et/ou
(b) d'une grandeur représentative d'un moyen permettant d'atteindre et/ou de maintenir un état de mouvement du support (10) avec et sans charge (50)

est conçu et configuré et, à cet effet, est notamment connecté par des lignes de commande et de mesure (42) à une unité de capteurs (61, 62) et/ou est configuré pour la commande du stator (120) et/ou du déplaceur (110).

**10.** Dispositif de traitement (1) pour le traitement d'un produit (5), en particulier une machine d'ensachage tubulaire, avec un entraînement multidimensionnel (100) selon l'une des revendications 6 à 9, lequel est conçu et configuré pour transporter une charge (50) au moyen d'un déplaceur (110) servant de support (10) de la charge (50), notamment en tant que récipient (11) ou associé à un récipient (11).

Fig. 1

## Fig. 2

EP 3 440 441 B2

# Fig. 3

EP 3 440 441 B2

# Fig. 4

EP 3 440 441 B2

Fig. 5

EP 3 440 441 B2

**Fig. 6**

**Fig. 7**

# Fig. 8

# Fig. 9

# Fig. 10

EP 3 440 441 B2

**Fig. 11**

95

120

122

91

90

93

y
z
x

**Fig. 12**

120

122

93

**Fig. 13**

120

91

122

EP 3 440 441 B2

Fig. 14

55
58
59
56
57
A
A1
A2
ΔA
f1
f2
Δf
f
0
0

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19945584 A1
- WO 2004074057 A1
- WO 2015056847 A1
- JP H0336115 A